# EUROPEAN PATENT APPLICATION

(11) **EP 2 527 904 A2**
(43) Date of publication of application: **28.11.2012**
(21) Application number: 12168827.9
(22) Date of filing: 22.05.2012
(51) Int. Cl.: G02B 26/04, G02B 26/02, G09G 3/34, G02B 6/35

(54) **Display device**

(30) Priority: 24.05.2011 JP 2011116123
(71) Applicant: Japan Display East Inc., Chiba (JP)
(72) Inventor: Muneyoshi, Takahiko, Chiba-ken, 297-8622 (JP); Nitta, Hidekazu, Chiba, 297-8622 (JP)
(74) Representative: Beetz & Partner

(57) **Abstract**

The display device includes: an insulating substrate (215) section that is a substrate having an insulation property; a thin film transistor section (220) in which a thin film transistor is formed in each pixel on the insulating substrate section (215); a shutter mechanism section (300) that is electrically driven by the thin film transistor of the thin film transistor section (200) so as to control light transmission of each pixel (210). The shutter mechanism section (300) has a mechanical layer (352) that is a structural portion and a conductive layer (354) that is formed on the mechanical layer (352) . Both of the mechanical layer (352) and the conductive layer (354) are fixed in direct contact with the conductive portion (226) formed on the thin film transistor section (200).

## Description

### BACKGROUND OF THE INVENTION

### 1. Field of the Invention

The present invention relates to a display device, and particularly a display device in which a micro electric mechanical system is used for pixels.

### 2. Description of the Related Art

The display devices such as a liquid crystal display device have come into widespread use as display devices for television receivers and information communication terminals such as a computer. In a liquid crystal display device, orientation of liquid crystal molecules, which are sealed between two substrates of the liquid crystal panel, is changed, and a transmission degree of light, which is emitted from a back light to the liquid crystal panel, is changed, thereby displaying an image. Recently, display devices including a liquid crystal display device have been used particularly in mobile phones and smart phones.

On the other hand, a structure using a microfabrication technique called Micro Electro Mechanical Systems (MEMS) has used in various fields, and thus it has also attracted attention in the display device field. JP2008-197668A and JP2008-533510T disclose a display device that displays an image by providing a MEMS shutter mechanism to each pixel, moving a shutter in the shutter mechanism, and transmitting and adjusting the luminance of each pixel by blocking light from a back light in a short period of time.

### SUMMARY OF THE INVENTION

In the display device using the MEMS shutter mechanism, in order to control transmitting and blocking of light in a short period of time, it is necessary for a movable part of the shutter mechanism in the pixel to be operated at a high speed. For this reason, a large structural load is applied to a connection portion to secure electrical and mechanical connection between the movable part and the substrate. Thus, in a case where the strength of the connection portion is weak, this may be problematic in that it has a great effect on an operation and a durability of the display device.

The present invention has been made in view of the above-mentioned situation, and its object is to provide a display device which performs display control through the shutter mechanism of each pixel, in particular, a display device which is structurally stronger and has improved durability.

According to an aspect of the present invention, provided is a display device including: an insulating substrate that is a substrate having an insulation property; and plural pixels that forms a display section on the insulating substrate. Each pixel of the plural pixels includes a thin film transistor, a shutter mechanism section that is electrically driven by the thin film transistor so as to control light transmission of each pixel, and a first conductive layer that is formed on the insulating substrate. The shutter mechanism section includes a mechanical layer that is a structural portion and a second conductive layer that is formed on the mechanical layer. Both of the mechanical layer and the second conductive layer are fixed in direct contact with the first conductive layer.

Further, in the display device according to the aspect of the present invention, the shutter mechanism section may include a shutter portion that blocks light, a beam portion that is operable to drive the shutter portion and is a beam-like structure extending in a direction parallel with a substrate surface of the insulating substrate, and an anchor portion that anchors and supports the beam portion. Each of the shutter portion, the beam portion and the anchor portion may have the mechanical layer and the second conductive layer. The mechanical layer and the second conductive layer of the anchor portion may be fixed in direct contact with the first conductive layer.

Further, in the display device according to the aspect of the present invention, the anchor portion may have a bowl shape, and the second conductive layer may be formed around the outside of the bowl shape of the mechanical layer. Furthermore, the second conductive layer may also be formed inside the bowl shape of the mechanical layer.

Further, in the display device according to the aspect of the present invention, the anchor portion may have a bowl shape, and the mechanical layer may be formed around the outside of the bowl shape of the second conductive layer, and also formed inside the bowl shape of the second conductive layer.

### BRIEF DESCRIPTION OF THE DRAWINGS

Fig. 1 is a diagram illustrating a MEMS shutter display device according to a first embodiment of the present invention.
Fig. 2 is a diagram illustrating a configuration of a TFT substrate of Fig. 1.
Fig. 3 is a perspective view illustrating the TFT substrate of one pixel of Fig. 2 in an enlarged manner.
Fig. 4 is a top plan view of a shutter mechanism section of Fig. 3.
Fig. 5 is a cross-sectional view along the line V-V in Fig. 4.
Fig. 6 is a diagram illustrating a case where a mechanical layer and a conductor layer of a first beam portion and a second beam portion are reversely arranged in the same view as Fig. 5.
Fig. 7 is a cross-sectional view of a shutter mechanism section according to a second embodiment in view of Fig. 5.
Fig. 8 is a cross-sectional view of a shutter mechanism section according to a third embodiment in view of Fig. 5.

### DETAILED DESCRIPTION OF THE INVENTION

Hereinafter, embodiments of the present invention will be described with reference to the accompanying drawings. Note that, in the drawings, the same or equivalent elements are represented by the same reference numerals and signs, and repeated description thereof will be omitted.

### [First Embodiment]

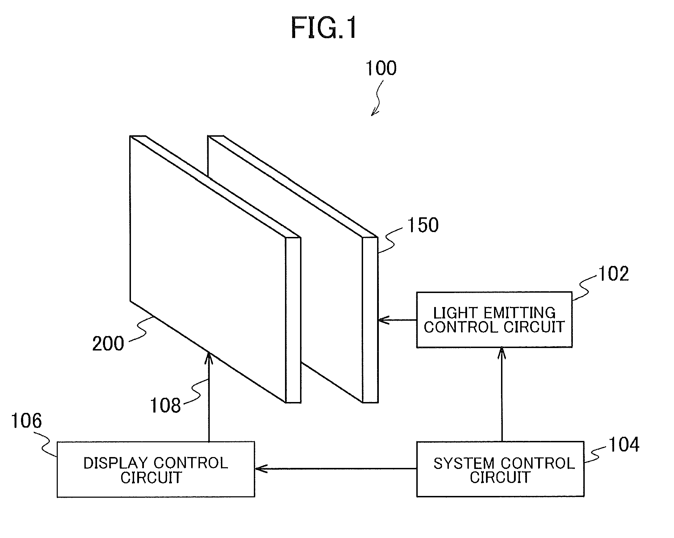

Fig. 1 is a diagram illustrating a MEMS shutter display device 100 that controls a image display by using a shutter mechanism of each pixel according to a first embodiment of the present invention. As shown in Fig. 1, the MEMS shutter display device 100 includes: a backlight light source 150 that has aperture portions (not shown in the drawing) transmitting light for each pixel; a Thin Film Transistor (TFT) substrate 200 that controls the light transmission from the backlight light source 150 through shutter mechanism sections 300 to be described later; a light emitting control circuit 102 that performs control for emitting light by time-shifting light beams having three colors of R (red), G (green), and B (blue) of the backlight light source 150; a display control circuit 106 that controls operations of the shutter mechanism sections 300 of the TFT substrate 200 through a panel control line 108; and a system control circuit 104 that performs integral control of the light emitting control circuit 102 and the display control circuit 106.

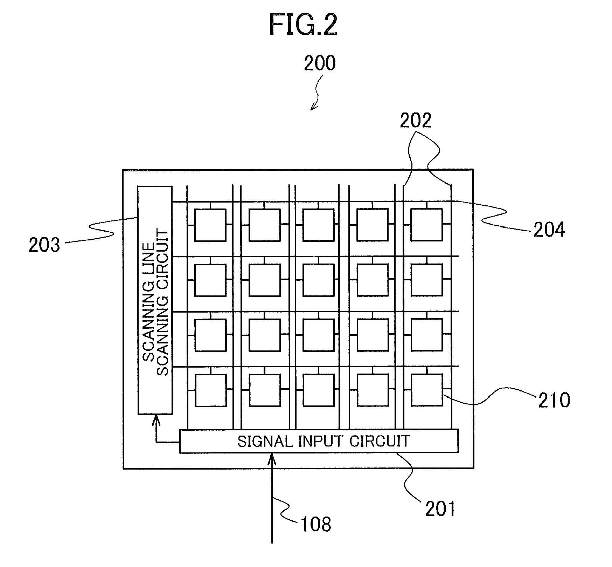

Fig. 2 is a diagram illustrating a configuration of the TFT substrate 200 of Fig. 1. Pixels 210 are arranged in a matrix in the display region of the TFT substrate 200. Each pixel 210 is connected to a scanning line 204 in a row direction, and is connected to a signal line 202 in a column direction. One end of the scanning line 204 is connected to a scanning line scanning circuit 203, and a signal input circuit 201 is provided at one end of the signal line 202. Note that, the signal input circuit 201 controls the scanning line scanning circuit 203, and the panel control line 108 is input to the signal input circuit 201. When driving timing and image data are input from the panel control line 108 to the TFT substrate 200, while controlling the scanning line scanning circuit 203 at predetermined timing, the signal input circuit 201 inputs digital image data to the signal line 202. Each pixel 210 acquires digital image data from the signal line 202 at predetermined timing by controlling an operation of the scanning line scanning circuit 203 through the scanning line 204.

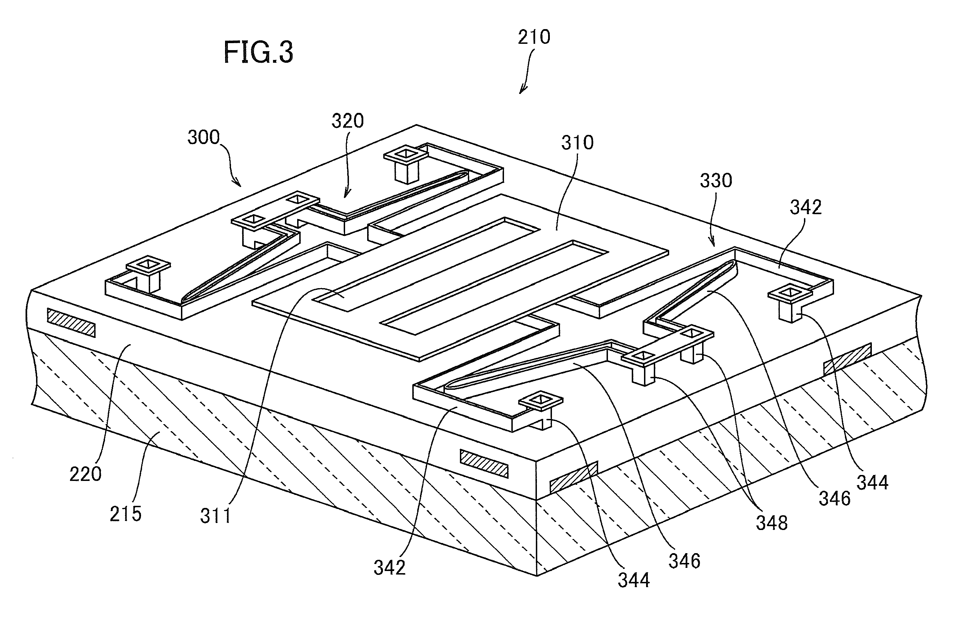

Fig. 3 is a perspective view illustrating the TFT substrate 200 of one pixel 210 of Fig. 2 in an enlarged manner. As shown in the drawing, the pixel 210 includes: a glass substrate 215 that has insulating property; a thin film transistor that is formed on the glass substrate 215; a thin film transistor section 220 that has the signal line 202 and the scanning line 204; and the shutter mechanism section 300 that is formed on the thin film transistor section 220 and is electrically controlled by the thin film transistor in the thin film transistor section 220 so as to thereby perform a mechanical operation.
   The shutter mechanism section 300 includes: aperture portions 311; a shutter portion 310 that transmits or blocks light emitted from the backlight light source 150 depending on its position; and a first actuator portion 320 and a second actuator portion 330 that move the shutter portion 310 to a position for transmitting light and a position for blocking the light. Each of the first actuator portion 320 and the second actuator portion 330 includes: first beam portions 342 that support the shutter portion 310 and are electrically connected to the shutter portion 310; first anchor portions 344 that fix first beam portions 342 to the thin film transistor section 220 and are electrically connected with prescribed wires of the thin film transistor section 220; second beam portions 346 that operate the shutter portion 310 by charging themselves with different charges of the first beam portions 342 and thereby pulling the first beam portions 342; and second anchor portions 348 that fix the second beam portions 346 to the thin film transistor section 220 and are electrically connected with the prescribed wires of the thin film transistor section 220.

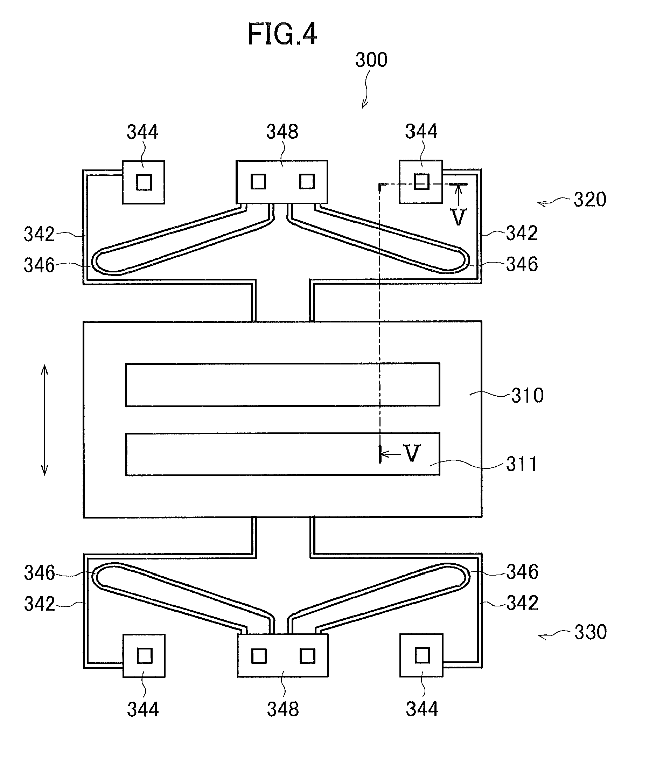

Fig. 4 is a top plan view of the shutter mechanism section 300 of Fig. 3. The shutter mechanism section 300 has a shape which is symmetric with respect to the shutter portion 310. Thus, when the shutter portion 310 is moved in a direction to be close to the first actuator portion 320 through the driving of the first actuator portion 320, the light emitted from the backlight light source 150 is transmitted through the aperture portion 311. In contrast, when the shutter portion 310 is moved in a direction to be close to the second actuator portion 330 through the driving of the second actuator portion 330, the light emitted from the backlight light source 150 is blocked by the shutter portion 310.

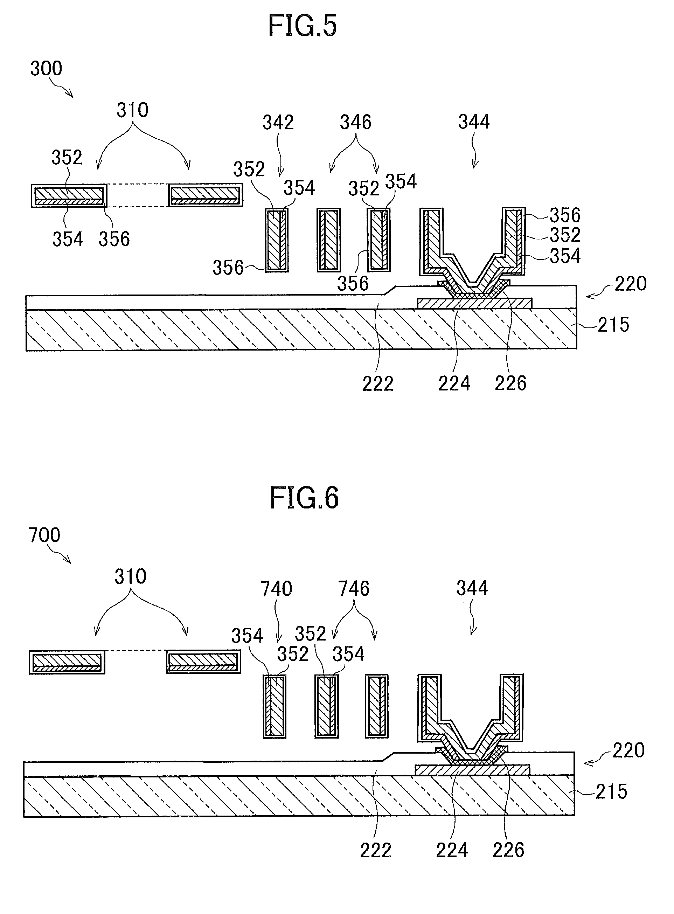

Fig. 5 is a cross-sectional view in the V-V line of Fig. 4. As shown in the drawing, each of the shutter portion 310, the first beam portions 342, the second beam portions 346, and the first anchor portions 344 includes a mechanical layer 352 that is mainly in charge of structural strength; a conductor layer 354 (second conductive layer) that is mainly in charge of electric characteristics; a dielectric layer 356 that covers the mechanical layer 352 and the conductor layer 354 so as to secure an electrical insulation property. Here, an example of a material forming the mechanical layer 352 includes a metal such as Al, Cu, Ni, Cr, Mo, Ti, Ta, Nb, or Nd or an alloy thereof, a dielectric material such as Al₂O₃, SiO₂, Ta₂O₅, or Si₃N₄, or a semiconductor material such as diamond-like carbon, Si, Ge, GaAs, or CdTe or an alloy thereof. Further, an example of a material for forming the conductor layer 354 includes Al, Cu, Ni, Cr, Mo, Ti, Ta, Nb, or Nd, or an alloy thereof, a semiconductor material such as diamond-like carbon, Si, Ge, GaAs, or CdTe, or an alloy thereof.

The thin film transistor section 220 on the glass substrate 215 has wires 224, a protective layer 222, and conductive portions 226 (the first conductive layer) that electrically connects the wires 224 to the conductor layer 354 of the first anchor portions 344. Here, each wire 224 is formed of a material such as Al or Cu, and each conductive portion 226 is formed of a transparent electrode such as Indium Tin Oxide (ITO).

As shown in the drawing, both of the conductor layer 354 and the mechanical layer 352 of each first anchor portion 344 are fixed in direct contact with the conductive portion 226 of the thin film transistor section 220. Further, similar to the first anchor portion 344, the second anchor portion 348 includes the mechanical layer that is mainly in charge of structural strength; the conductor layer that is mainly in charge of electric characteristics; the dielectric layer that covers the mechanical layer and the conductor layer so as to secure electrical insulation property. Both of the mechanical layer and the conductor layer of the second anchor portion 348 are fixed in contact with the conductive portion of the thin film transistor section not shown in the drawing.

When the thin film transistor section 220 applies a voltage to the conductor layer 354 of the first anchor portion 344 through the conductive portion 226, an electric potential difference occurs between the first beam portion 342, which is electrically connected with the first anchor portion 344, and the second beam portion 346 which is electrically connected with the second anchor portion 348, and the first beam portion 342 and the second beam portion 346 attract each other by a positive electric power, whereby it is possible to move the shutter portion 310. At this time, reactive force is applied to the interface between the first anchor portion 344 and the conductive portion 226. However, not only the conductor layer 354, but also the mechanical layer 352 is fixed in contact with the conductive portion 226 of the thin film transistor section 220, and thus they are structurally enhanced, and durability thereof is improved. Further, likewise, the reactive force is also applied to the second anchor portion, but the conductor layer of the second anchor portion and the mechanical layer of the second anchor portion are fixed in contact with the conductive portion of the thin film transistor section not shown in the drawing, and thus they are structurally enhanced, and durability thereof is improved. Specifically, by using a structure in which both the mechanical layer 352 and the conductor layer 354 of the first embodiment are fixed in direct contact with the conductive portion 226, as compared with the case where only the conductor layer 354 is fixed, the mechanical layer 352 is able to directly receive stretching or twisting force which is applied to the bottom of the first and second anchor portions when the shutter portion 310 is moved, and thus it is possible to perform a stable shutter operation. Further, as compared with a case where only the mechanical layer 352 is fixed, it is possible to directly apply a voltage for driving the shutter supplied from the bottom of the first and second anchor portions to the conductor layer 354, and thus it is possible to perform a stable shutter operation.

Note that, in the embodiment, the mechanical layer 352 and the conductor layer 354 of the first beam portion 342 and the second beam portion 346 may be reversely arranged as shown in a first beam portion 742 and a second beam portion 746 of a shutter mechanism section 700 of Fig. 6.

### [Second Embodiment]

Next, a MEMS shutter display device according to a second embodiment will be described. The MEMS shutter display device according to the second embodiment is the same as that of the first embodiment described with reference to Figs. 1 to 4 in respective configurations of the MEMS shutter display device, the TFT substrate, the pixels, and the shutter mechanism section, and thus description thereof will be omitted.

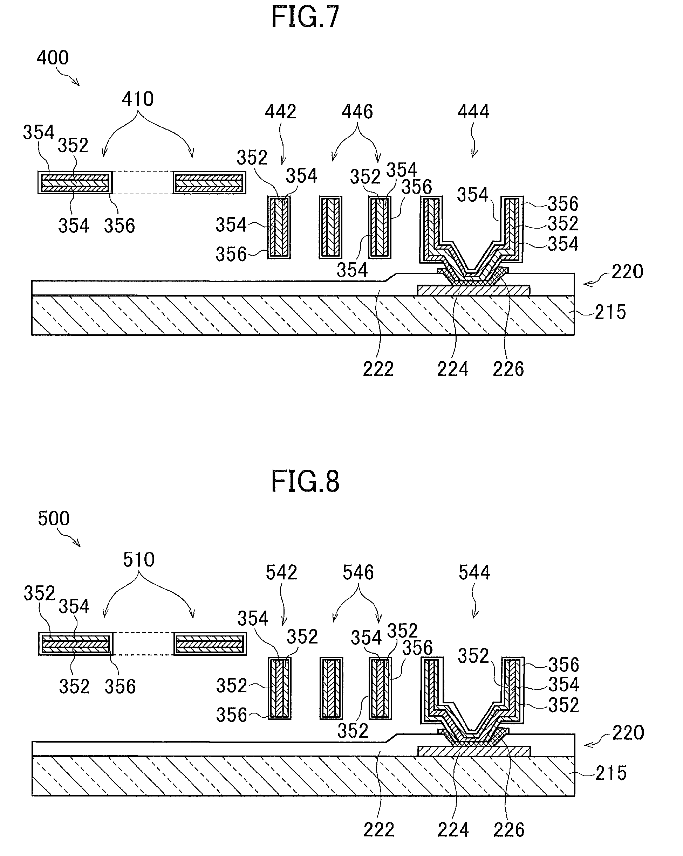

Fig. 7 is a cross-sectional view of a shutter mechanism section 400 according to the second embodiment in view of Fig. 5 of the first embodiment. Similar to the first embodiment, the shutter mechanism section 400 includes: a shutter portion 410; first beam portions 442 that support the shutter portion 410 and are electrically connected to the shutter portion 410; first anchor portions 444 that fix first beam portions 442 to the thin film transistor section 220 and are electrically connected with the wires 224 of the thin film transistor section 220; second beam portions 446 that operate the shutter portion 410 by charging themselves with different charges of the first beam portions 442 and thereby pulling the first beam portions 442; and second anchor portions that are not shown in the drawing, fix the second beam portions 446 to the thin film transistor section 220, and are electrically connected with the prescribed wires of the thin film transistor section 220.

Here, the present embodiment is different from the first embodiment of Fig. 5 in that there is further provided the conductor layer 354 inside the mechanical layer 352 of the first anchor portion 344 of Fig. 5. Thus, in the first anchor portions 444 of the present embodiment, the mechanical layer 352 has a structure in which it is sandwiched between the conductor layers 354, and the mechanical layer 352 and the outside conductor layer are fixed to the conductive portions 226 of the thin film transistor section 220. The conductor layers 354, between which the mechanical layer 352 is interposed, are connected through via holes not shown in the drawing.

Accordingly, when the shutter portion 410 performs driving, the first beam portion 442 and the second beam portion 446 attract each other, and thus reactive force is applied to the interface between the first anchor portion 444 and the conductive portion 226. However, similar to the first embodiment, in the shutter mechanism section 400 of the second embodiment, not only the conductor layer 354, but also the mechanical layer 352 is fixed in contact with the conductive portion 226 of the thin film transistor section 220, and thus those are structurally enhanced, and durability thereof is improved.

### [Third Embodiment]

Next, a MEMS shutter display device according to a third embodiment will be described. The MEMS shutter display device according to the third embodiment is the same as that of the first embodiment described with reference to Figs. 1 to 4 in respective configurations of the MEMS shutter display device, the TFT substrate, the pixels, and the shutter mechanism section, and thus description thereof will be omitted.

Fig. 8 is a cross-sectional view of a shutter mechanism section 500 according to the third embodiment in view of Fig. 5 of the first embodiment. Similar to the first embodiment, the shutter mechanism section 500 includes: a shutter portion 510; first beam portions 542 that support the shutter portion 510 and are electrically connected to the shutter portion 510; first anchor portions 544 that fix first beam portions 542 to the thin film transistor section 220 and are electrically connected with the wires 224 of the thin film transistor section 220; second beam portions 546 that operate the shutter portion 510 by charging themselves with different charges of the first beam portions 542 and thereby pulling the first beam portions 542; and second anchor portions that are not shown in the drawing, fix the second beam portions 546 to the thin film transistor section 220, and are electrically connected with the prescribed wires of the thin film transistor section 220.

Here, the present embodiment is different from the first embodiment of Fig. 5 in that the conductor layer 354 has a structure in which it is sandwiched between the mechanical layers 352, and in the first anchor portion 544, the conductor layer 354 and the outside mechanical layer 352 are fixed to the conductive portions 226 of the thin film transistor section 220.

Accordingly, when the shutter portion 510 performs driving, the first beam portion 542 and the second beam portion 546 attract each other, and thus reactive force is applied to the interface between the first anchor portion 544 and the conductive portion 226. However, similar to the first embodiment, not only the conductor layer 354, but also the mechanical layer 352 is fixed in contact with the conductive portion 226 of the thin film transistor section 220, and thus those are structurally enhanced, and durability thereof is improved.

Note that, in the above-mentioned embodiments, the shutter portion is operated by using two actuators, but a single actuator may be used, a display device having another shutter mechanism may be used, and a structure having a mechanism of connection with the substrate may be adopted.

Further, in the above-mentioned embodiments, the identical conductive layer, which is in contact with the mechanical layer and the conductor layer, is formed as conductive portions, but may be in direct contact with wires, and may be in contact with the wires through another conductive layer.

While there have been described what are at present considered to be certain embodiments of the invention, it will be understood that various modifications may be made thereto, and it is intended that the appended claim cover all such modifications as fall within the scope of the invention as defined in the claims. The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A display device comprising:
an insulating substrate (215) that is a substrate having an insulation property; and
a plurality of pixels (210) that forms a display section on the insulating substrate (215),
wherein each pixel (210) of the plurality of pixels includes:
a thin film transistor;
a shutter mechanism section (300) that is electrically driven by the thin film transistor so as to control light transmission of each pixel (210); and
a first conductive layer (226) that is formed on the insulating substrate (215);
wherein the shutter mechanism section (300) includes:
a mechanical layer (352) that is a structural portion; and,
a second conductive layer (354) that is formed on the mechanical layer (352), and
wherein both of the mechanical layer (352) and the second conductive layer (354) are fixed in direct contact with the first conductive layer (226).

2. The display device according to claim 1,
wherein the shutter mechanism section (300) includes
a shutter portion (310) that blocks light,
a beam portion (342, 346) that is operable to drive the shutter portion (310) and is a beam-like structure extending in a direction parallel with a substrate surface of the insulating substrate (215), and
an anchor portion (344, 348) that anchors and supports the beam portion (342, 346),
wherein each of the shutter portion (310), the beam portion (342, 346) and the anchor portion (344, 348) has the mechanical layer (352) and the second conductive layer (354), and
wherein the mechanical layer (352) and the second conductive layer (354) of the anchor portion (344, 348) are fixed in direct contact with the first conductive layer (226).

3. The display device according to claim 2,
wherein the anchor portion (344, 348) has a bowl shape, and
wherein the second conductive layer (354) is formed around the outside of the bowl shape of the mechanical layer (352).

4. The display device according to claim 3, wherein the second conductive layer (354) is also formed inside the bowl shape of the mechanical layer (352).

5. The display device according to claim 2,
wherein the anchor portion (344, 348) has a bowl shape, and
wherein the mechanical layer (352) is formed around the outside of the bowl shape of the second conductive layer (354), and is also formed inside the bowl shape of the second conductive layer (354).
